(19) Europäisches Patentamt
European Patent Office
Office européen des brevets

(11) **EP 4 109 687 A1**

(12) **EUROPEAN PATENT APPLICATION**

(43) Date of publication:
**28.12.2022 Bulletin 2022/52**

(21) Application number: **21305879.5**

(22) Date of filing: **25.06.2021**

(51) International Patent Classification (IPC):
**H01S 3/00** (2006.01)

(52) Cooperative Patent Classification (CPC):
**H01S 3/0057**; H01S 3/0092

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Ecole Polytechnique**
**91120 Palaiseau (FR)**
• **Federal Research Center Institute of Applied Physics of the Russian Academy of Sciences Nizhny Novgorod 603950 (RU)**

(72) Inventors:
• **MOUROU, Gérard Albert**
**91120 PALAISEAU (FR)**
• **MIRONOV, Sergey Yur'evich**
**603950 NIZHNY NOVGOROD (RU)**
• **KHAZANOV, Efim Arkad'evich**
**603950 NIZHNY NOVGOROD (RU)**
• **WHEELER, Jonathan**
**91120 PALAISEAU (FR)**

(74) Representative: **Novagraaf Technologies**
**Bâtiment O2**
**2, rue Sarah Bernhardt**
**CS90017**
**92665 Asnières-sur-Seine Cedex (FR)**

(54) **GENERATION OF HIGH ENERGY ULTRASHORT LASER PULSE**

(57) A laser system comprising: a laser source (10) for generating an input pulse (1) propagating along a propagation axis, wherein the input pulse (1) is a femtosecond laser pulse, spatially uniform in amplitude and having a wavelength λ; a first plane parallel medium (2) positioned so as to intersect the propagation axis of the input pulse (1), wherein the first plane parallel medium (2) is a transparent medium configured to perform nonlinear broadening of the spectrum of the input pulse (1) by self-phase modulation so as to generate a chirped laser pulse (3); a second plane parallel medium (5) working as multipath Fabry-Perot interferometer, wherein the second plane parallel medium (5) is positioned so as to intersect the propagation axis and such that the incidence angle (4) of the chirped laser pulse (3) relative to the normal axis of the second plane parallel medium (5) is non-zero, wherein the second plane parallel medium (5) is configured to temporally compress the chirped laser pulse (3) by correcting the spectral phase so as to generate a reflected laser pulse (6) of reduced duration compared to the chirped laser pulse (3).

FIG. 1

EP 4 109 687 A1

**Description**

TECHNICAL FIELD

Various example embodiments relate generally to a method and system for the control of temporal and intensity distribution of a high energy, ultrashort laser pulse with a wide spectral bandwidth.

BACKGROUND

A system for temporal compressing of a laser pulse is disclosed for example in patent document published under number FR2934722. The system includes a laser source providing a femtosecond laser pulse propagating along a z-axis, spatially uniform in amplitude. A transparent plate is placed to intersect the z-axis, the laser pulse having a power density per unit area such that the laser pulse induces self-phase modulation when the laser pulse passes through the transparent plate so as to generate a wide-spectrum laser pulse. Pulse shortening means are used to temporally compress the wide-spectrum laser pulse so as to generate a laser pulse of reduced duration.

Pulse shortening is possible through nonlinear spectrum broadening and correction of the spectral phase. Spectral broadening can be realized by the propagation of the pulse through a thin plane-parallel plate made of glass, e.g. fused silica, or transparent polymer. As a result of the cubic nonlinearity of the thin plane-parallel plate, the laser pulse accumulates a B-integral, which leads to a modification of the amplitude and phase of the spectrum. Correction of the quadratic component of the accumulated phase compresses the pulse in time and thereby increases the peak power. In the case of typical values of positive group velocity dispersion and a positive cubic nonlinear response for near-infrared wavelengths passing through a thin plane-parallel plate, the correction of the quadratic component of the phase requires a negative dispersion.

Multilayer dielectric mirrors may be designed to produce negative dispersion and may be used to correct the spectral phase introduced by the propagation of the pulse through the thin plane-parallel plate with thickness less than a millimeter. For TW-level laser pulses, a pulse shortening from 63 fs down to 21 fs at the 200 TW level and from 70 fs to 14 fs at the 250 TW level can for example be achieved.

An implementation of two consecutive stages of such a compressor allows to reduce the pulse duration to a single cycle of the light field oscillation. A temporal pulse compression from 75 fs to 15 fs at B-integral equal to 5 can for example be achieved.

One goal is to implement a compression scheme on PW-level laser systems for femtosecond laser pulse (*e.g.* 25 J; 25 fs). The use of multi-layer chirped mirrors is a demanding challenge in this approach.

Manufacturing the large-aperture mirrors with a complex structure of multiple layers of dielectric coatings capable of controlling the phase over an adequately broad spectral range is technological challenge.

In addition, the large number of multilayers required for phase control leads to a lower damage threshold. Pulses of very short duration and high energy may cause damage to an element of the laser system. The lower the damage threshold, the higher the risk of damage on an element of the laser system. So it is desirable to have a laser system for compression of femtosecond laser pulses with higher damage threshold, easier to manufacture and/or that is adapted to operate on PW-level laser pulses. It is also desirable to compress pulses of high energy, e.g. at the Joule level (between 10 to 100 Joules).

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a laser system comprises:

- a laser source for generating an input pulse propagating along a propagation axis, wherein the input pulse is a femtosecond laser pulse, spatially uniform in amplitude and having a wavelength $\lambda$;
- a first plane parallel medium positioned so as to intersect the propagation axis of the input pulse, wherein the first plane parallel medium is a transparent medium configured to perform nonlinear broadening of the spectrum of the input pulse by self-phase modulation which generates a chirped laser pulse;
- a second plane parallel medium working as multipath Fabry-Perot interferometer, wherein the second plane parallel medium is positioned so as to intersect the propagation axis and such that the incidence angle of the chirped laser pulse relative to the normal axis of the second plane parallel medium is non-zero,

wherein the second plane parallel medium is configured to temporally compress the chirped laser pulse by correcting the spectral phase so as to generate a reflected or transmitted laser pulse of reduced duration compared to the chirped laser pulse.

According to a second aspect, a method comprises:

- generating an input pulse propagating along a propagation axis, wherein the input pulse is a femtosecond laser pulse, spatially uniform in amplitude and having a wavelength $\lambda$;
- generating a chirped laser pulse by a first plane parallel medium positioned so as to intersect the propagation axis of the input pulse, wherein the first plane parallel medium is a transparent medium configured to perform nonlinear broadening of the spectrum of the input pulse by self-phase modulation so as to generate the chirped laser pulse;
- temporally compressing the chirped laser pulse by a second plane parallel medium working as multipath Fabry-Perot interferometer and applying spectral phase correction so as to generate a reflected laser pulse of reduced duration compared to the chirped laser pulse, wherein the second plane parallel medium is positioned so as to intersect the propagation axis and such that the incidence angle of the chirped laser pulse relative to the normal axis of the second plane parallel medium is non-zero.

BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 shows a schematic diagram of a laser system for generating a laser pulse of reduced duration.
FIGS. 2A-2B show simulations results for the reflected pulse of a laser system for spectral phase correction in first experimental conditions.
FIGS. 3A-3B show simulations results for the transmitted pulse of a laser system for spectral phase correction in first experimental conditions.
FIGS. 4A-4B show simulations results for the reflected pulse of a laser system for spectral phase correction in second experimental conditions.
FIGS. 5A-5B show simulations results for the reflected pulse of a laser system for spectral phase correction in third experimental conditions.
FIG. 6 shows a schematic diagram of a cascade system for generating a laser pulse of reduced duration.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

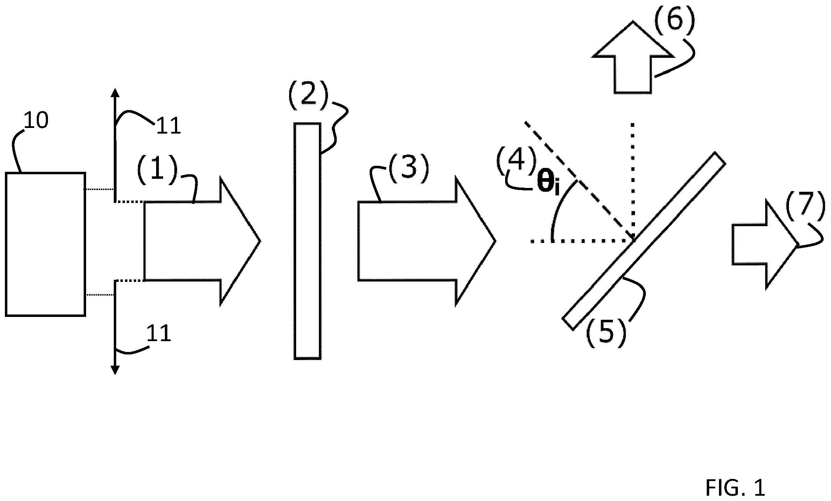

FIG. 1 shows a schematic diagram of a laser system (100) for generating a laser pulse of reduced duration. The laser system (100) is configured to perform pulse compression with the help of two plane parallel transparent media (2; 5).

The laser system (100) includes a laser source (10) for generating at least one input pulse (1) (also referred to herein as the input beam) propagating along a propagation axis. A temporal succession of input pulses may be used so long as these pulses do not introduce thermal effects on the index of refraction of the transparent medium (2) such that compression conditions are not fulfilled. The input pulse (1) is a femtosecond laser pulse having a wavelength $\lambda$. The duration of the input pulse (1) may for example be between 10 and 300 fs, for example 20 fs, 30 fs, 50 fs, etc.

The beam diameter of the input pulse (1) is sized such that the input pulse achieves an intensity that induces a nonlinear response within the first medium (several TW/cm$^2$) based on the initial energy and pulse duration of the input pulse (1). Typically, the diameter of the input beam at the output of the laser source is determined by compressor gratings in the laser source to avoid the damage of the compressor gratings. In the calculations presented below, the level of peak intensity corresponds to an intensity level in unfocused PW beams (several TW/cm$^2$). Nonlinear response of the first medium (2) may be controlled by the intensity of the pulse reaching the first medium (2), material properties (linear and nonlinear part of refractive index) of the first medium, and thickness of the first medium. But too large thickness will require more negative dispersion for compensating the reduction of the nonlinear effect.

Plane parallel medium means that the input surface and the exit surface of the plane parallel medium are substantially parallel one to the other. Also the surface quality should be sufficient such that the second plane parallel medium works as an interferometer. By surface quality it is meant here that the surface is a good quality mirror, especially smooth enough (with limited surface roughness compared to the wavelength λ, e.g. below λ/10 or optimally below λ/100) e.g. to avoid shifting of the beam by some angle.

The first plane parallel medium (2) is a non-linear transparent medium (2) used in transmission for the nonlinear broadening of the spectrum in a first stage of the laser system (100) and generation of a chirped pulse (3). The second plane parallel medium (5) is an ultrathin second plane parallel medium (5) working as a multi-path Fabry-Perot interferometer. The ultrathin second plane parallel medium (5) allows spectral phase correction and is used in a second stage of the laser system (100) to generate a reflected pulse with a corrected spectral phase.

The first plane parallel medium (2) is positioned so as to intersect the propagation axis of the input pulse (1).

The first plane parallel medium (2) is a transparent medium (2) configured to perform broadening of the spectrum of the input pulse (1) by self-phase modulation. In addition to self-phase modulation, the first plane parallel medium (2) is configured to generate a Group Velocity Dispersion (GVD) that stretches the pulse in time domain. The material of the first plane parallel medium (2) is selected for example such that the group velocity dispersion is $k_2 > 0$ and the refractive index is $n_2 > 0$. The contribution of the two effects (self-phase modulation effect and group velocity dispersion) allows the formation of a linearly chirped pulse, and more generally with a spectrum broader than the spectrum of the input pulse. The frequencies of this chirped pulse are not in phase with each other, with a phase dependence on wavelength or frequency remaining a regular or analytic continuous (not random) function. A chirped laser pulse (3) with larger spectrum relative to input pulse (1) is thus obtained at the output of the first plane parallel medium (2).

The second plane parallel medium (5) is configured to temporally compress the chirped laser pulse (3) by correcting the spectral phase and to generate a reflected laser pulse (6) of reduced duration compared to the initial laser pulse (1). The second plane parallel medium (5) compensates both the linear and nonlinear phase dispersion produced by the first plane parallel medium (2).

The second plane parallel medium (5) is working as a Fabry-Perot interferometer. Any plane parallel medium with good surface quality may operate as Fabry-Perot interferometer. In addition, the thickness of the second plane parallel plate is about the wavelength of the input pulse to obtain compression, while excluding additional nonlinear effects and pulse broadening due to linear dispersion in the second plane parallel medium (5). The second plane parallel medium (5) may be a plane parallel plate or a plane parallel film. The second plane parallel medium (5) is positioned so as to intersect the propagation axis and such that the incidence angle θi (4) of the chirped laser pulse (3) relative to the normal axis of the second plane parallel medium (5) is non-zero.

The incidence angle is large and may for example be close to 90 degrees, for example between 85 and 90 degrees for common transparent optical media (e.g. glass, fused silica glass, transparent polymer) having a linear refraction index, e.g. between 1.3 and 1.8. This large angle maximizes the reflectivity from both the front and back surfaces of the uncoated plane parallel medium (5). With such an incidence angle the incidence surfaces of second plane parallel medium (5) has to be large enough to not distort the wavefront of the incident chirped pulse. The angle may be close to 90° or between 85° and 90°. See also Table 1 below that provides further examples of materials that may be used with corresponding range of angle of incidence.

The incidence angle may be adjusted as a function of the thickness of the plane parallel medium (5) such that the peak intensity of the reflected laser pulse is maximum or between 90% and 100% of the maximum peak intensity obtained over the angle range from 0 to 90 degrees.

The second plane parallel medium (5) has a thickness adjusted in dependence of the wavelength of the laser system and serves to correct the spectral phase through the interference of the pulses reflecting from the front and rear surfaces. The ultrathin second plane parallel medium (5) may have a thickness on the order of the wavelength of the laser source (e.g. between 0.1 *λ and 4*λ), but there are several local optimal values at intervals proportional to the wavelength, e.g. at approximately λ/2, A, 2*λ, 3*λ. With a wavelength around 800 nm, the thickness may therefore be between 80 nm and 3.2 microns, e.g. around 1.2 or 1.6 microns. The goal is to optimize the phase correction with a practical plane parallel medium (5) while remaining thin enough to minimize additional nonlinear contribution to the chirped pulse. In general, the lower the thickness of the second plane parallel medium (5), the better from performance point of view since the losses due to non-linear effects decreases. But from manufacturing point of view, it is easier to select a higher thickness. Generally, with a wavelength between 400 and 800 nm, the thickness of the ultrathin second plane parallel medium (5) is below 100 microns or at least below 10 microns.

The thickness of ultrathin second plane parallel medium (5) may be between 0.3 and 3.2 microns for a wavelength of 800 nm. Therefore the thickness ratio between the first plane parallel medium (2) and the second plane parallel medium (5) is around 1000. The thickness depends on the central wavelength of the input pulse and material properties of first and second plane parallel media.

Generally, the GVD of the second plane parallel medium (5) is positive for the operating wavelength. A negative dispersion effect is introduced through the interference effect in the reflections from the front and back surfaces of the second plane parallel medium (5). The material of the second plane parallel medium (5) may be a linear or non-linear material dispersive material with positive group velocity dispersion.

To reduce the loss of energy of the reflected pulse through the second plane parallel medium (5), the reflection coefficient of the exit surface of the second plane parallel medium (5) may be above 90%. An implementation of ultrathin plane parallel plate (5) with reflection coefficient of the exit surface close to 100% (Gires-Tournois interferometer) can also be used.

A transmitted laser pulse (7) may also be obtained at the output (through the exit surface) of the second plane parallel medium (5) but the pulse compression achieved on the transmitted pulse is lower than on the reflected pulse.

Each plane parallel medium (2; 5) may for example consist in a layer of a single transparent material. Each plane parallel medium (2; 5) may be made of glass, fused silica, transparent polymer, liquid crystal material, etc. Transparent may mean a transparency of at least 80% at the operating wavelength with no significant scattering due to material irregularities.

At the output of the laser system (100) a compressed ultrashort pulse (6) of high energy is obtained. The energy level of the compressed ultrashort pulse (6) may be about the same as the input laser pulse (1) but with a much shorter pulse.

The temporal compression ratio achieved may be between 2 or 5 and may vary in dependence on the material used for the two plane parallel media (2; 5), the original frequency content and intensity of the input pulse (1), as well as the angle of incidence on second plane parallel medium (5) and the thickness of the second plane parallel medium (5). Simulation results are discussed below to illustrate for example how the angle of incidence on second plane parallel medium (5) may be adjusted for a given thickness of the second plane parallel medium (5).

The laser system (100) overcomes difficulties associated with the chirped mirrors used for spectral phase correction and pulse compression. The replacement of the chirped mirrors of prior laser systems by an ultrathin second plane parallel medium (5) working as a multi-path Fabry-Perot interferometer allows to simplify the fabrication of the laser system since only a single plane parallel medium (5) need to be produced. Further, the laser system (100) allows to generate high energy and short duration laser pulse with a compression ratio between 2 and 5.

The laser system (100) has an improved laser-induced damage threshold compared to that of typical negative dispersive mirrors which require multiple micron thick dielectric coatings to operate, require to produce large aperture surface for reflection very broaden spectrum and keep constant group delay dispersion along the spectrum. The interferences that develop in these complicated coatings can lead to peak intensities within the material interfaces that lead to damage within the media. Key advantages of the laser system (100) with two plane parallel media is the high damage threshold that can be achieved and the possibility to be implemented for very broad spectrum.

The laser system (100) will now be described with more details.

The laser source (10) is for example a PW-level laser source. The energy of the input femtosecond laser pulse is for example greater than 10 Joules (e.g. 25 J with a duration of 25 fs), e.g. between 10 and 100 Joules. This type of laser source capable of producing laser pulses with a uniform energy distribution across the laser pulse width is often referred to as a "top hat" laser.

An example of such a laser source (10) is the CETAL laser in Bucharest, which is a petawatt (PW) laser capable of producing pulses of 25 Joules and 25 femtoseconds with a virtually constant energy distribution over the entire pulse section. The BELLA laser (acronym for "Berkeley Lab Laser Accelerator") can also be cited as an example of a PW laser.

The laser source (10) may produce laser pulses with cross-sections of more than 10 cm in diameter, typically between 15 and 25 cm. In space, such a pulse can be imaged as a "wafer" of photons having on the z-axis a thickness equal to the "speed of light" per "pulse duration" and in a plane perpendicular to this z-axis a circular shape with a diameter determined by the laser's capabilities.

The input pulse (1) may be spatially uniform in amplitude: that is to say it has a spatial square shape (also called a top hat shape). The laser source (10) may comprise or be followed by a spatial filter (11) configured to standardize the spatial shape of the laser pulses so as to provide, at the output of the spatial filter, the spatially uniform input laser pulses that reaches the first plane parallel medium (2). A spatial filter (11) may be formed by a diaphragm, having for example 11 millimeters in diameter.

Also the input pulse (1) may be collimated towards the transparent medium (2) in order to avoid the loss of the uniform spatial distribution of the input pulse (1) before it reaches the transparent medium (2).

For a high energy laser source (10), typically greater than a Joule, the input pulse (1) at the output of the laser source (10) may also be of uniform spatial amplitude, which avoids having to standardize a non-uniform beam and, consequently, losing part of the energy of the beam by the spatial filter (11).

The first plane parallel medium (2) is a transparent medium (2) positioned in the path of the input pulse (1). Transparent means that the medium is transparent at the wavelength A of the input laser beam, and the medium should also be transparent over the entire useful spectrum around this wavelength $\lambda$.

The first plane parallel medium (2) is configured to generate a broadening of the pulse spectrum by self-phase modulation (SPM) generated by the nonlinear refractive index $n_2$ of the material composing the first plane parallel medium (2) and the intensity I(t) of the pulse (Kerr effect). In such a medium, the refractive index n of the material is dependent on the intensity of the input pulse (1) and is changing as the pulse is propagating through the first plane parallel medium (2): $n = n_o + n_2$ I(t). The rise and fall of the pulse therefore changes the refractive index of the medium with which the pulse interacts. This self-phase modulation effect widens the spectrum of the input pulse by creating new wavelengths. The chirped pulse at the output of the first plane parallel medium (2) is therefore a pulse having a spectrum widened compared to the spectrum of the input pulse (1).

To obtain a significant effect, the pulse intensity has to be high enough when it reaches the first plane parallel medium (2). Typically, the power density of the input pulse is greater than $10^{11}$ W/cm$^2$ in order to allow the self-phase modulation effect to be achieved in the transparent medium (2). The power density is defined as the energy of the input pulse divided by the product the duration of the input pulse and the spatial area of the input pulse (1) as it enters the transparent medium (2).

Moreover, since the input pulse (1) is spatially uniform in amplitude, the pulse intensity and the power flux density are also constant over the entire cross-section of the pulse. This gives the same effect for photons passing at the center as for photons passing at the periphery of the pulse.

The input pulse (1) may have a B-integral higher than 4 when it passes through the transparent medium (2) in order to obtain a pulse reduction factor (compression factor) higher than 3. The maximum level of B-integral is limited by small-scale self-focusing phenomenon, which could destroy laser beam and transport optics. The accumulated value of the B-integral is important for a compression of high energy laser beams. The compression factor can be estimated as $(1 + 0.5 \times$ B-Integral) if we neglect the linear dispersion in the first plane parallel medium (2). So, the more B-integral is accumulated in plate (2) the higher the compression that can be achieved.

The input pulse (1) may have a B-integral less than 3 when it passes through the transparent plate (2). For a value of the B-integral less than 3, it was found that the spatial deformation was relatively negligible. In the case of larger broadening, a larger B-integral (e.g. B-integral of 5) can lead to spatial deformation of the beam but these unwanted spatial features can be filtered and reduced by free-space propagation of the beam.

It is known that the B-integral of a laser beam of wavelength A crossing in the *z* direction a medium of thickness L, having a nonlinear refractive index $n_2(z)$ and a power density $I(z)$ is defined as follows:

$$\text{B-Integral} = \frac{2\pi}{\lambda} \int_0^L n_2(z)I(z)dz$$

The thickness required for the first plane parallel medium (2) is determined by the desired B-integral accumulated in the first plane parallel medium (2) for the used intensity level. In fact, the first plane parallel medium (2) is needed to broaden the spectrum. Linear dispersion of refractive index may here be considered as a parasitic effect, as far as it leads to pulse broadening in time domain and decreasing of peak intensity. The thickness depends on the intensity, the refractive index $n_2$, the desired B-integral and the impact of linear part of refractive index (GVD). Also, as explained above, the higher the thickness of the first plane parallel medium (2) producing higher positive dispersion and therefore requires greater negative dispersion to compensate with the second plane parallel medium to obtain a shorter pulse.

In practice, the thickness of the first plane parallel medium (2) can also be obtained by simulation by solving the nonlinear Schrödinger equation.

The first plane parallel medium (2) may have a thickness for example between 0.1 and 10 millimeters.

Each of first and second plane parallel media (2; 5) may be a transparent plate or a transparent film (or membrane). Various material may be used for the plate and / or film.

Each of first and second plane parallel media (2; 5) may be made of quartz, fused silica $SiO_2$ or a crown borosilicate glass. A sheet of silica $SiO_2$ has good resistance to flow and makes it possible to obtain satisfactory performance for the laser system. The manufacture of such a plane parallel medium may consist in taking a flat glass, for example a float glass, and then thinning it by polishing until the desired thickness is obtained with the required precision, which may be less than one tenth of a wavelength.

Each of first and second plane parallel media (2; 5) may alternatively be made of a flexible, ductile, transparent film, for example made of transparent polymer. The material used can be chosen from a variety of materials, such as amorphous thermoplastic polymers, PVDC, additive PVC, cellulose triacetate, polyester, cyclic olefin polymer, etc. These materials have the advantage that they can be easily processed by continuous processes such as extrusion or lamination.

The choice of the material of the first plane parallel medium (2) is made according to its optical qualities of transparency with respect to the laser wavelength A and its non-linear refractive index $n_2$ and / or its mechanical capacity to produce films with a uniform thickness. It is desirable that the thickness variation is smaller than the wavelength A of the laser. However the wavefront variation generated by this thickness variation can also be corrected by a deformable mirror.

The flexibility of the film is an element to be taken into account for the ease of processing and the reduced risk of breakage, unlike traditional materials (glass, quartz) which are fragile, not ductile. From this point of view, it should be noted that for the quality of the self-phase modulation effect and/or group velocity dispersion, it is not necessary for the film to be flat. On the other hand, a significant parameter is the thickness since, as a first approximation, the B-integral which defines the broadening of the spectrum is proportional to the length of the material traversed, thus to the thickness of the film for the first plane parallel medium (2). However, in order to maintain the wavefront surface and the possibility to reach the smallest diffraction spot, a deformable mirror may be used. Thus, advantageously, a polished glass slide which can cost several thousands of euros may be replaced by a plastic film which costs a few euros, or tens of euros.

The choice of the material of the second plane parallel medium (5) is made according to its reflection properties. A combination of entrance angle, value of refractive index and plate thickness is selected to achieve compression and growth of peak intensity. All three parameters are adjusted for achieving a given reflection coefficient and an accumulated negative dispersion.

The spectral phase correction achieved through the ultrathin second plane parallel medium (5) is described more thoroughly. The spectral phase correction allows to correct the phase of the spectrally dispersed pulse (chirped pulse) (3) obtained at the output of the first plane parallel medium (5).

A Fabry-Perot interferometer may be seen as an optical cavity including two parallel reflecting surfaces (input and exit surfaces). The ultrathin second plane parallel medium (5) works as a Fabry-Perot interferometer, thereby creating interferences between the multiple reflections of the laser pulses between the two reflecting surfaces of the ultrathin second plane parallel medium (5).

The spectral response of a Fabry-Perot interferometer (or Fabry-Perot cavity resonator) is based on interference between the light beam launched into it and the light beam circulating in the interferometer. Constructive interference occurs if the two pulses are in phase, leading to resonant enhancement of light inside the interferometer. If the two pulses are out of phase, destructive interference occurs and only a small portion of the launched light beam is stored inside the interferometer. Each of the stored, transmitted, and reflected light beam is spectrally modified compared to the incident light.

The equations describing the modification of spectral amplitude and spectral phase of the reflected pulse (6) and the transmitted pulse (7) from/through the second plane parallel medium are now presented.

We assume here that the input pulse (1) has a Gaussian shape in the temporal domain:

$$A\left(t\right) = A_{10} \cdot e^{-2 \cdot \ln 2 \cdot \frac{t^2}{T^2}} \qquad \text{(EQ1)}$$

where $t$ is time, $T$ is the pulse duration at the FWHM (Full-Width Half-Maximum) level and $A_{l0}$ is a fixed amplitude. The first plane parallel medium (2) modifies the laser pulse parameters in accordance with the following equation:

$$\frac{\partial A}{\partial z} + \frac{1}{u}\frac{\partial A}{\partial t} - i\frac{k_2}{2}\frac{\partial^2 A}{\partial t^2} = -i\gamma_1 \cdot \left( |A|^2 \cdot A - \frac{2 \cdot i}{\omega_0} \cdot \frac{\partial}{\partial t}\left( |A|^2 \cdot A \right) - \frac{1}{\omega_0^2} \cdot \frac{\partial^2}{\partial t^2}\left( |A|^2 \cdot A \right) \right) \qquad \text{(EQ2)}$$

where $z$ is longitudinal coordinate along the propagation direction, $u$ is the group velocity, $\omega_0$ is the central angular frequency of the input pulse spectrum (1), $\gamma_1 = (3\pi k_0 \cdot \chi^{(3)})/(2 \cdot n_o^2)$, $n_0$ is the usual linear index of refraction at low-intensity,

$\chi^{(3)}$ is a tensor of the third order nonlinear susceptibility $\chi^{(3)} = \left(\frac{4}{3}\right) n_0^2 \varepsilon_0 c n_2$, $k_0 = 2\pi/\lambda = \omega_0/c$ is a wave vector in vacuum, $k(\omega) = \omega/c \cdot n_0(\omega)$ is the medium-dependent wave vector and the parameter for the group velocity dispersion

$$k_2 = \left.\frac{\partial^2 k}{\partial \omega^2}\right|_{\omega_o} .$$

(GVD) The speed of light is noted c and the permittivity of free space is noted as $\varepsilon_0$.

Using equation (EQ2), we can also compute the B-integral as $B = \gamma_1 \cdot A_{10}^2 \cdot L.$

At the output of the first plane parallel medium (2) the amplitude and spectra of the electric field are respectively $A(t, z=L)$ and $S(\Omega, z=L) = F\{A(t, z=L)\}$, where $\Omega$ is the local frequency, $F\{\}$ is the Fourier Transform operator, where L is the thickness of the first plane parallel medium (2).

The second plane parallel medium (5) of FIG. 1 can be used for spectral phase correction and pulse shortening. In accordance with multipath interference in the ultrathin plane parallel medium (5) each spectral component $S^{(r)}(\theta_i, \omega, h)$ of the reflected pulse (6) is modified in the following manner:

$$S^{(r)}(\theta_i, \omega, h) = -\frac{\left(1 - e^{-i\delta(\theta_i, \omega, h)}\right) \cdot \sqrt{R(\theta_i, \omega)}}{1 - R(\theta_i, \omega) \cdot e^{-i\delta(\theta_i, \omega, h)}} \cdot S(\Omega, z = L) \qquad (EQ3)$$

Here, $\theta_i$ is the incidence, or entrance, angle of the chirped pulse on the surface of the second plane parallel medium (5) as shown in FIG. 1, $\omega = \omega_0 + \Omega$ is the frequency of the chirped pulse, $R(\theta_i, \omega)$ is the reflection coefficient at frequency $\omega$ and incidence angle $\theta_i$, where

$$\delta(\theta_i, \omega, h) = \frac{\omega}{c} n(\omega) \cdot h \cdot \cos(\theta_t) \qquad (EQ4)$$

$$\cos(\theta_t) = \sqrt{1 - \frac{\sin^2(\theta_i)}{n^2(\omega)}} \qquad (EQ5)$$

The reflection coefficient depends on light polarization. For s-polarized light and respectively p-polarized light, it can be found that the reflection coefficient $R_s(\theta_i, \omega)$ and respectively $R_p = R_p(\theta_i, \omega)$ may be computed by the given formulas:

$$R_s = \left(\frac{\cos(\theta_i) - n(\omega) \cdot \cos(\theta_t)}{\cos(\theta_i) + n(\omega) \cdot \cos(\theta_t)}\right)^2 \qquad (EQ6)$$

$$R_p = \left(\frac{n(\omega)\cos(\theta_i) - \cos(\theta_t)}{n(\omega) \cdot \cos(\theta_i) + \cos(\theta_t)}\right)^2 \qquad (EQ7)$$

where $n(\omega)$ is the linear index of refraction at the given angular frequency $\omega$, $R_s = R_s(\theta_i, \omega)$ and $R_p = R_p(\theta_i, \omega)$ being the reflection coefficient for s-polarized and p-polarized light, respectively. This value has a dependence on the incidence angle and angular frequency of the light $\omega$.

The spectral amplitude of the transmitted pulse (7) at frequency $\omega$ is:

$$S^{(t)}(\theta_i, \omega, h) = \frac{1 - R(\theta_i, \omega)}{1 - R(\theta_i, \omega) \cdot e^{-i\delta(\theta_i, \omega, h)}} \cdot S(\Omega, z = L) \qquad (EQ8)$$

For reflected pulses (6) it is possible to find optimal parameters for equation EQ3 that increase / maximize the peak power in dependence on the incidence angle (4) $\theta_i$ and thickness L of the second plane parallel medium (5).

Table 1 below gives a range [AOI_min; AOI_max] for the incidence angle $\theta_i$(4) in dependence on the material (and its refractive index n) of the second plane parallel medium (5) for s-polarized light. The AOI_min value corresponds to reflection coefficient $R_s \sim 0.75$ and the AOI_max value corresponds to reflection coefficient $R_s \sim 0.90$.

**Table 1**

| Material | n [0.8 $\mu$m] | AOI_min [$R_s \sim 0.75$] | AOI_max [$R_s \sim 0.90$] |
| --- | --- | --- | --- |
| Magnesium fluoride (MgF$_2$) | 1.375 | 86.1 | 88.6 |
| Calcium fluoride (CaF$_2$) | 1.431 | 85.8 | 88.5 |
| Fused Silica (Fused Quartz) | 1.453 | 85.7 | 88.5 |
| BK-7 Glass | 1.511 | 85.4 | 88.3 |
| Zeonex E48R (thermoplastic) | 1.524 | 85.3 | 88.3 |
| SF11 (high index) | 1.765 | 84.0 | 87.8 |

Simulation results

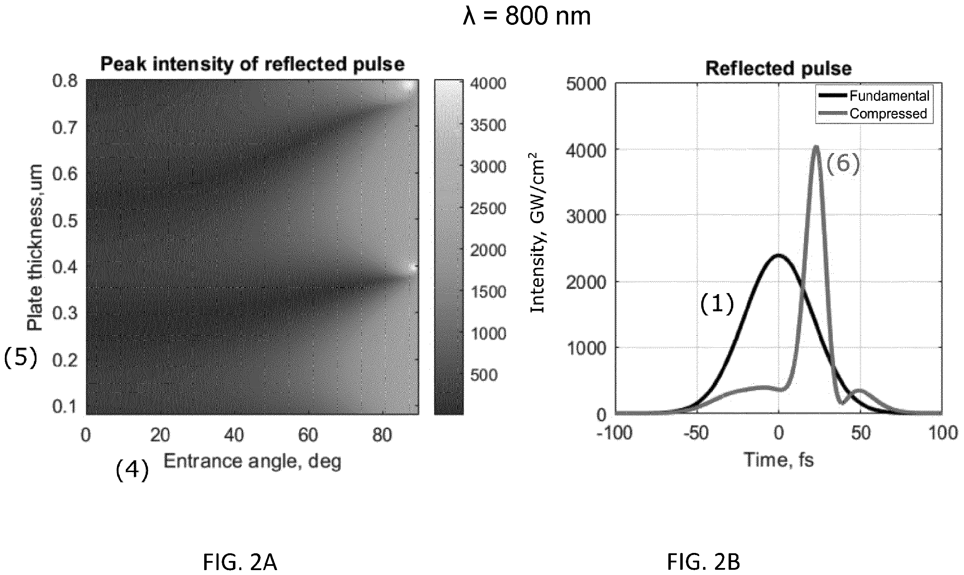

For all the simulation results illustrated by FIGS. 2 to 5, the wavelength is 800 nm. The progression in changes made relative to Figure 2:

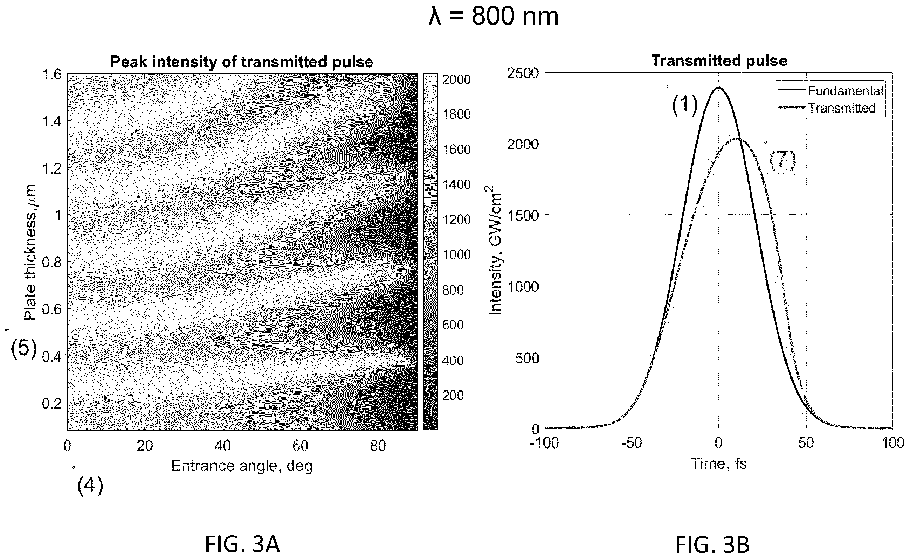

- Figure 3 shows same conditions in transmission rather than reflection;

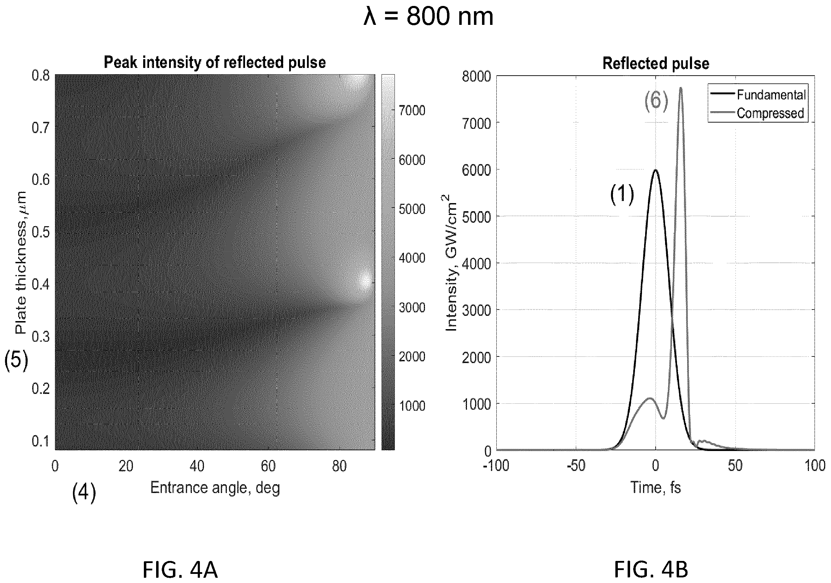

- Figure 4 shows shorter initial input pulse duration, same initial energy level in reflection;

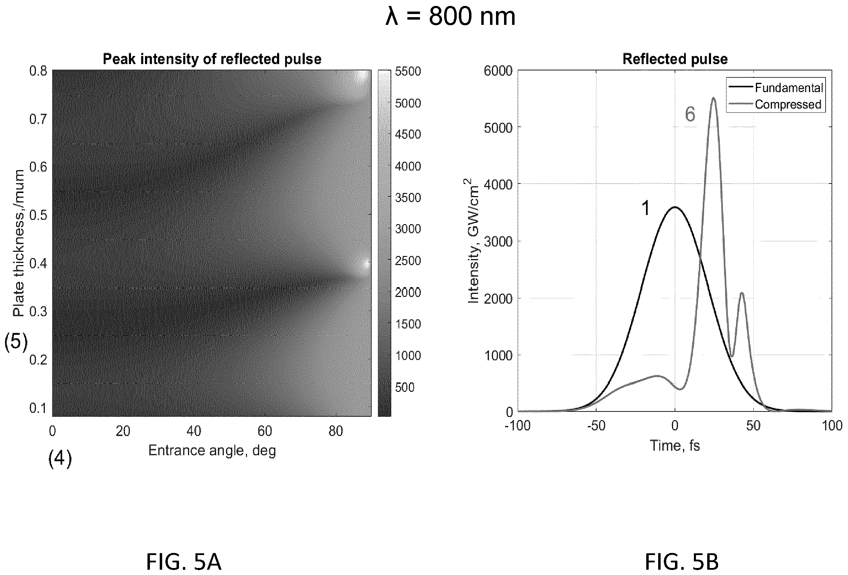

- Figure 5 shows same initial input pulse duration; higher initial energy level in reflection.

FIGS. 2A-2B show simulation results obtained with a laser system in first experimental conditions. Here the simulations for the reflected pulse (6) resulting from a s-polarized input optical pulse (1) with an initial duration of 50 fs, energy of 10 J, and peak intensity of 2.4 TW/cm$^2$ before interacting with two fused silica plates (2; 5). The thickness of the first plate (2) is chosen to be 1 mm for B$_{int}$ = ~4.5.

FIG. 2A shows the variations of the peak intensity of the pulse reflected (6) from the second plate (5) versus the entrance angle (4) and thickness of the second plate (5).

FIG. 2B show the pulse intensity in time for the input pulse (1) of 50 fs and the reflected compressed pulse (6) from the second plate (5) under optimal conditions for plate thickness of 0.39 microns and entrance angle of incidence (4) of 88.94 deg. The reflected pulse has a duration of ~17 fs.

In order to demonstrate the operation of the scheme, we consider here an s-polarized optical pulse (1) with a duration of 50 fs, central wavelength 800 nm, beam radius of 5 cm, 10 J energy and peak intensity of 2.4 TW/cm$^2$. Both plates (2; 5) are assumed made of fused silica (k$_2$=367 fs$^2$/cm, $\gamma$=2.43·10$^{-7}$ cm$^2$/GW). The thickness of the first plate is chosen to be 1 mm. In this case, the input pulse accumulates a B-integral of ~4.5.

After the first plate (2) the pulse spectrum supports a shorter pulse duration but the exiting pulse (3) is ~62 fs. The diagram of peak intensity versus entrance angle to the second plate (5) and its thickness is presented in FIG. 2A. The intensity of the input pulse (1) and reflected pulse (6) are presented in FIG. 2B. The reflected pulse has a duration of ~17 fs and peak intensity of ~3.5 TW/cm$^2$ for the optimal peak power which appears at $\theta_i$=88.94 degrees and $h$=0.39 $\mu$m. In this example case, the observed parameters allow for an increase in the peak intensity of ~1.47 times and a reduction by 2.9 in the pulse duration.

It is also possible to consider the duration of the transmitted pulse (7).

FIGS. 3A-3B show simulation results obtained with a laser system. Simulations for the transmitted pulse (7) resulting from a s-polarized input optical pulse (1) with an initial duration of 50 fs, energy of 10 J, and peak intensity of 2.4 TW/cm$^2$ after interacting with two fused silica plates (2; 5) The thickness of the first plate (2) is chosen to be 1 mm for B$_{int}$ = ~4.5.

FIG. 3A shows the variations of the peak intensity of the transmitted pulse (7) through the second plate (5) as a function of the entrance angle (4) and the thickness of the second plate (5).

FIG. 3B shows variations of the pulse intensity in time for the input pulse (1) of 50 fs and the transmitted pulse (7) from the second plate (5) under optimal conditions for the plate thickness of 0.28 microns and entrance angle of incidence (4) of 22.54 deg. The transmitted pulse has a duration of ~62 fs.

For the observed laser pulse parameters an optimal entrance angle of incidence (4) to the second plate (5) is $\theta_i$=22.54 degrees and the thickness of the second plate (5) is $h$= 0.28 $\mu$m. The comparison of the intensities for the input pulse (1) and transmitted pulse (7) is presented in the plot of FIG. 3B and shows that the duration of the transmitted pulse (7) remains relatively unchanged from the input pulse duration in passing through the second plate (5) at 50 fs but with self-steepening effects modifying the pulse shape.

The optimal entrance angle (4) is at a large angle ($\theta_i$ ~90 deg) and for powerful laser beams with transversal size D it is necessary to use a very large aperture ($\sim$ D/cos($\theta_i$)) ultrathin plate (5) for spectral phase correction. Plates made of polymers can be used for this purpose, as an example those employed as pellicle beamsplitters where a large aperture with a homogeneous, ultra-thin thickness are essential properties of the polymer films. Liquid crystal materials might also be considered for use as the second ultrathin second plane parallel medium (5).

FIGS. 4A and 4B show experimental results obtained for pulse with duration shorter than 50 fs. Here the simulations for the reflected pulse (6) result from a s-polarized input optical pulse (1) with an initial pulse duration of 20 fs, energy of 10 J, and peak intensity of 5.9 TW/cm$^2$ before interacting with two fused silica plates (2; 5). The thickness of the first plate (2) is chosen to be 0.4 mm for $B_{int}$ = ~4.5.

FIG. 4A shows the variations of the peak intensity of the reflected pulse (6) from the second plate (5) as a function of the entrance angle (4) and the thickness of the second plate (5).

FIG. 4B shows variations of the pulse intensity in time for the input pulse (1) of 20 fs and the reflected compressed pulse (6) of ~7.8 fs from the second plate (5) under optimal conditions for plate thickness of 0.403 microns and entrance angle of incidence (4) of 87.71 deg.

Here we consider initial 20 fs pulses while maintaining the same values for the other beam parameters (10 J, beam radius 5 cm) than for the simulations presented with respect to FIGS. 2A and 2B. This leads to an initial peak intensity of ~5.9 TW/cm$^2$. For such pulses, it is reasonable to use a thinner first plate (2) to minimize the effect of the significant linear dispersion. In order to keep the value of B-integral the same as previously ($B_{int}$ =4.5), we chose the thickness of the first plate (2) as 0.4 mm. The diagram of peak intensity versus entrance angle to the second plate (5) and its thickness is presented in FIG. 4A. The intensity of the input pulse (1) and reflected pulse (6) under optimized conditions ($\theta_i$=87.71 deg; thickness $h$=0.403 $\mu$m) for the second plate (5) are presented in FIG. 4B. The resulting reflected pulse has a duration ~7.8 fs and peak intensity of ~7.75 TW/cm$^2$ for the optimal peak approximately 1.3 times higher than the original. The transmitted pulse (7) is again longer than the initial pulse with a duration of ~ 31 fs and is modified with self-steepening effects under its optimal angle of incidence (4) and thickness conditions for its second plate (5).

The pulse energy may be increased in order to demonstrate a larger peak power. FIGS. 5A-5B show simulation results for a reflected pulse (6) resulting from a s-polarized input optical pulse (1) with an initial duration of 50 fs, energy of 15 J, and peak intensity of 3.6 TW/cm$^2$ before interacting with two fused silica plates (2; 5). The thickness of the first plate (2) is chosen to be 1 mm for $B_{int}$ = ~6.84.

FIG. 5A shows variations of the peak intensity of the reflected pulse (6) from the second plate (5) as a function of the entrance angle (4) and the thickness of the second plate (5).

FIG. 5B shows variations of the pulse intensity in time for the input pulse (1) of 50 fs and the reflected compressed pulse (6) of ~ 15 fs from the second plate (5) under optimal conditions for plate thickness of 0.397 microns and entrance angle of incidence (4) of 88.77 deg.

Here, we consider an s-polarized optical pulse (1) with a duration of 50 fs, central wavelength 800 nm, pulse energy of 15 J, and initial peak intensity of 3.6 TW/cm$^2$ so that the $B_{int}$= 6.84 for the first plate (2) with a thickness of 1 mm thickness. The diagram of peak intensity versus entrance angle to the second plate (5) and its thickness is presented in FIG. 5A. The intensity of the input pulse (1) and the reflected pulse (6) under optimized conditions ($\theta_i$=88.77 degrees; thickness $h$= 0.397 $\mu$m) for the second plate (5) are presented in FIG. 5B. The resulting reflected pulse has a duration ~15 fs and peak intensity of ~5.5 TW/cm$^2$ for the optimal peak approximately 1.54 times higher than the original. The transmitted pulse (7) has a duration ~ 67 fs and is modified with self-steepening effects under its optimal conditions of angle of incidence (4) and second plane parallel medium (5) thickness.

Cascade systems

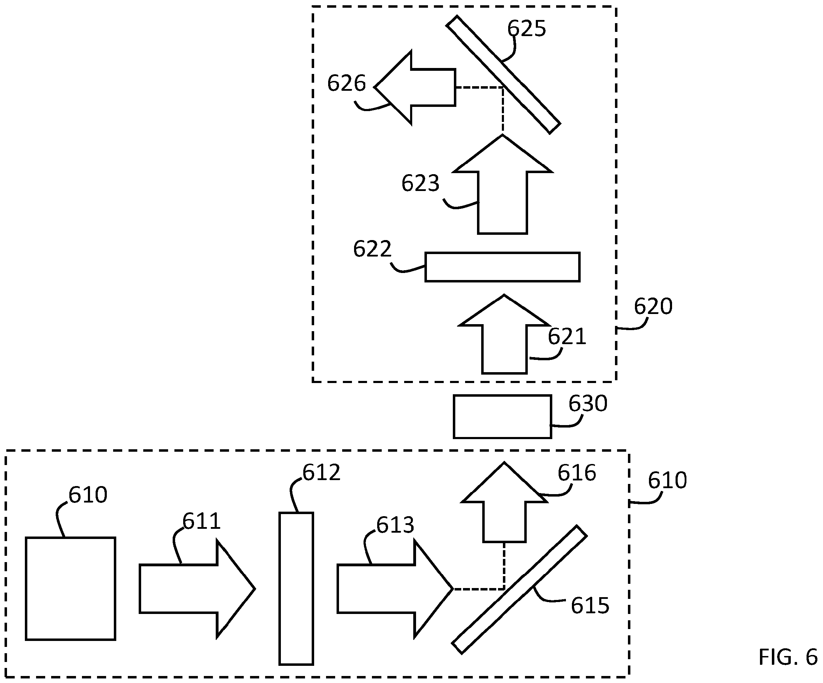

As illustrated by FIG. 6, a cascade laser system (600) may comprise a first laser system (610) as described above by reference to FIGS. 1 to 5 and a second laser system (620) as described above by reference to FIGS. 1 to 5, but without laser source, in which the reflected laser beam (616) at the output of the first laser system (610) is used as input laser beam for the second laser system (620).

More generally, several laser systems for generating a laser pulse of reduced duration as described above with reference to FIGS. 1 to 5 may be used in a cascade system to obtain, at the output of the system, an even shorter pulse duration..

The first laser system (610) includes a laser source (610) for generating an input pulse (1) propagating along a propagation axis, wherein the input pulse (611) is a femtosecond laser pulse, spatially uniform in amplitude and having a wavelength $\lambda$.

The first laser system (610) includes a first plane parallel medium (612) identical or similar to the first plane parallel medium (2) of the laser system (100) of FIG. 1. The first plane parallel medium (612) is positioned so as to intersect the propagation axis of the input pulse (611). The first plane parallel medium (612) is a transparent medium configured to perform nonlinear broadening of the spectrum of the input pulse (611) by self-phase modulation so as to generate a chirped laser pulse (633).

The first laser system (610) also includes a second plane parallel medium (615) identical or similar to the second plane parallel medium (5) of the laser system (100) of FIG. 1. The second plane parallel medium (615) is working as multipath Fabry-Perot interferometer. The second plane parallel medium (615) is positioned so as to intersect the propagation axis and such that the incidence angle of the chirped laser pulse (613) relative to the normal axis of the second plane parallel medium (615) is non-zero. The second plane parallel medium (615) is configured to temporally compress the chirped laser pulse (613) by correcting the spectral phase so as to generate a reflected laser pulse (616) of reduced duration compared to the chirped laser pulse (613).

Likewise, the second laser system (620) includes a first plane parallel medium (622) identical or similar to the first plane parallel medium (2) of the laser system (100) of FIG. 1. The first plane parallel medium (622) is positioned so as to intersect the propagation axis of the input pulse (621). The first plane parallel medium (622) is a transparent medium configured to perform nonlinear broadening of the spectrum of the input pulse (621) by self-phase modulation so as to generate a chirped laser pulse (633).

The second laser system (620) also includes a second plane parallel medium (625) identical or similar to the second plane parallel medium (5) of the laser system (100) of FIG. 1. The second plane parallel medium (625) is working as multipath Fabry-Perot interferometer. The second plane parallel medium (625) is positioned so as to intersect the propagation axis and such that the incidence angle of the chirped laser pulse (623) relative to the normal axis of the second plane parallel medium (625) is non-zero. The second plane parallel medium (625) is configured to temporally compress the chirped laser pulse (623) by correcting the spectral phase so as to generate a reflected laser pulse (626) of reduced duration compared to the chirped laser pulse (623).

Between two laser systems of the cascade system, filtering means (630) are preferably positioned for spatially filtering the output reflected laser beam and generating a filtered beam used as an input beam (621) for the following laser system (620) so that this input beam has an integral B less than 3. In fact, in the absence of these filtering means

(630), the output reflected laser beam (616) of the first laser system (610) could have an integral B which is too great to be directly injected onto a transparent plane parallel medium (622) in the second laser system (620).

The filtering means (630) may be configured to spatially filter the output laser pulse from the first laser system (610) so as to generate a filtered pulse used as an input pulse in the second laser system (620). The filtering means (630) may for example include a first reflective focusing element, e.g. an off-axis parabolic mirror, for focusing the reflected laser beam (616) at the output of the first laser system (610) in a diaphragm and a second focusing element (615) to recollimate the filtered beam (621). The filtered beam (621) is then used as input laser beam (621) for the second laser system (620) as described above by reference to FIGS. 1 to 5.

Thanks to this cascade system, it is for example possible to obtain a reduction in the pulse duration by a factor of 10, with two laser systems in cascade and, between these laser systems, filtering means (630) as previously described.

The invention also relates to a method for compressing a laser pulse, the method comprising the steps of:

- generating an input pulse (1) propagating along a propagation axis, wherein the input pulse (1) is a femtosecond laser pulse, spatially uniform in amplitude and having a wavelength $\lambda$;
- generating a chirped laser pulse (3) by a first plane parallel medium (2) positioned so as to intersect the propagation axis of the input pulse (1), wherein the first plane parallel medium (2) is a transparent medium configured to perform nonlinear broadening of the spectrum of the input pulse (1) by self-phase modulation so as to generate the chirped laser pulse (3);
- temporally compressing the chirped laser pulse (3) by a second plane parallel medium (5) working as multipath Fabry-Perot interferometer so as to generate a reflected laser pulse (6) of reduced duration compared to the chirped laser pulse (3), wherein the second plane parallel medium (5) is positioned so as to intersect the propagation axis and such that the incidence angle (4) of the chirped laser pulse (3) relative to the normal axis of the second plane parallel medium (5) is non-zero.

A laser system and method for pulse post-compression and peak power enhancement of high power laser pulses using two plane parallel transparent media have been described. The method can be applied after the optical compressor at femtosecond laser systems of any power scale. The resulting increase in the peak intensity within a shorter time is a benefit for applications seeking a large ponderomotive force. In applications where the leading structure of the pulse is detrimental then a contrast enhancement method, such as a plasma mirror, can be introduced after the pulse compressor in order to eliminate this pre-pulse signal.

An ultrathin second plane parallel transparent medium with thickness on the order of the wavelength of the laser as depicted in FIG. 1 can be used as an alternative to a series of large aperture multilayer dielectric mirrors with varied layers designed to produce negative dispersion for a reflected pulse. This replacement has the compound benefit of simplifying the number of optical components required while using an element (the ultrathin second plane parallel transparent medium) having a higher laser damage threshold.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

**Claims**

1. A laser system comprising:

    - a laser source (10) for generating an input pulse (1) propagating along a propagation axis, wherein the input pulse (1) is a femtosecond laser pulse, spatially uniform in amplitude and having a wavelength $\lambda$;
    - a first plane parallel medium (2) positioned so as to intersect the propagation axis of the input pulse (1), wherein the first plane parallel medium (2) is a transparent medium configured to perform nonlinear broadening of the spectrum of the input pulse (1) by self-phase modulation so as to generate a chirped laser pulse (3);
    - a second plane parallel medium (5) working as multipath Fabry-Perot interferometer, wherein the second plane parallel medium (5) is positioned so as to intersect the propagation axis and such that the incidence angle (4) of the chirped laser pulse (3) relative to the normal axis of the second plane parallel medium (5) is non-zero,

    wherein the second plane parallel medium (5) is configured to temporally compress the chirped laser pulse (3) by correcting the spectral phase so as to generate a reflected laser pulse (6) of reduced duration compared to the chirped laser pulse (3).

2. The system according to claim 1, wherein the thickness of the second plane parallel medium (5) is in the order of the wavelength $\lambda$.

3. The system according to claim 1 or 2, wherein the thickness of the second plane parallel medium (5) is below 3.2 micron.

4. The system according to any of the preceding claims, wherein the second plane parallel medium (5) is made of a layer of a single material.

5. The system according to any of the preceding claims, wherein the second plane parallel medium (5) is a plate or a film.

6. The system according to any of the preceding claims, wherein the second plane parallel medium (5) is made of a material selected in the group consisting of glass, fused silica, transparent polymer, liquid crystal material.

7. The system according to any of the preceding claims, wherein the reflection coefficient of the exit surface of the second plane parallel medium (5) is above 90%.

8. The system according to any of the preceding claims, wherein the incidence angle is between 85 and 90 degrees.

9. The system according to any of the preceding claims, wherein the incidence angle is adjusted as a function of the thickness of the second plane parallel medium (5) such that the peak intensity of the reflected laser pulse is maximum or between 90% and 100% of the maximum.

10. The system according to any of the preceding claims, wherein the second plane parallel medium (5) of a given material and a given thickness such that the peak intensity of the reflected laser pulse is maximum or between 90% and 100% of the maximum.

11. The system according to any of the preceding claims, wherein the input pulse is a PW-level laser pulse.

12. The system according to any of the preceding claims, wherein the input pulse (1) has a power density per unit area such that the input pulse induces self-phase modulation when the input pulse (1) passes through the first plane parallel medium (2) to generate the chirped laser pulse (3).

13. The system according to any of the preceding claims, wherein the laser source is configured such that the input pulse has a B-integral below 5 when the input pulse passes through the first plane parallel medium (2).

14. A method for compressing a laser pulse, the method comprising the steps of:

  - generating an input pulse (1) propagating along a propagation axis, wherein the input pulse (1) is a femtosecond laser pulse, spatially uniform in amplitude and having a wavelength $\lambda$;
  - generating a chirped laser pulse (3) by a first plane parallel medium (2) positioned so as to intersect the propagation axis of the input pulse (1), wherein the first plane parallel medium (2) is a transparent medium configured to perform nonlinear broadening of the spectrum of the input pulse (1) by self-phase modulation so as to generate the chirped laser pulse (3);
  - temporally compressing the chirped laser pulse (3) by a second plane parallel medium (5) working as multipath Fabry-Perot interferometer and applying spectral phase correction so as to generate a reflected laser pulse (6) of reduced duration compared to the chirped laser pulse (3), wherein the second plane parallel medium (5) is positioned so as to intersect the propagation axis and such that the incidence angle (4) of the chirped laser pulse (3) relative to the normal axis of the second plane parallel medium (5) is non-zero.

FIG. 1

EP 4 109 687 A1

FIG. 2B

FIG. 2A

$$\lambda = 800 \text{ nm}$$

FIG. 3A

FIG. 3B

# λ = 800 nm

**Peak intensity of reflected pulse**

**Reflected pulse**

FIG. 4A

FIG. 4B

EP 4 109 687 A1

$$\lambda = 800 \text{ nm}$$

FIG. 5A

FIG. 5B

EP 4 109 687 A1

FIG. 6

Europäisches
Patentamt

European
Patent Office

Office européen
des brevets

# EUROPEAN SEARCH REPORT

Application Number

EP 21 30 5879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | FR 3 017 495 A1 (ECOLE POLYTECHNIQUE DGAR [FR]) 14 August 2015 (2015-08-14) * paragraphs [0010] – [0051]; figures 1-4 * | 1-14 | INV. H01S3/00 |
| Y | MIRONOV S YU ET AL: "Thin plate compression of a sub-petawatt Ti:Sa laser pulses", APPLIED PHYSICS LETTERS, AMERICAN INSTITUTE OF PHYSICS, 2 HUNTINGTON QUADRANGLE, MELVILLE, NY 11747, vol. 116, no. 24, 15 June 2020 (2020-06-15), XP012247741, ISSN: 0003-6951, DOI: 10.1063/5.0008544 [retrieved on 2020-06-15] * page 2411011, left-hand column, paragraph 1 – page 2411014, right-hand column, paragraph 1; figures 1-4 * | 1-14 | |
| Y | US 3 551 034 A (TOURNOIS PIERRE ET AL) 29 December 1970 (1970-12-29) * column 1, line 67 – column 4, line 27; figures 1-4 * | 1-14 | TECHNICAL FIELDS SEARCHED (IPC) H01S |
| Y | AKIMOTO K ET AL: "Micromechanically controlled GT interferometer for optical-pulse narrowing", SENSORS AND ACTUATORS A: PHYSICAL, ELSEVIER BV, NL, vol. 82, no. 1-3, 1 May 2000 (2000-05-01), pages 79-82, XP004198242, ISSN: 0924-4247, DOI: 10.1016/S0924-4247(99)00313-1 * page 79, right-hand column, paragraph 2 – page 82, left-hand column, paragraph 1; figures 1,3-6 * | 2,3 | |

The present search report has been drawn up for all claims

| Place of search | Date of completion of the search | Examiner |
|---|---|---|
| Munich | 8 December 2021 | Laenen, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 5879

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2021

| Patent document cited in search report | | Publication date | Patent family member(s) | | Publication date |
|---|---|---|---|---|---|
| FR 3017495 | A1 | 14-08-2015 | FR 3017495 A1 | | 14-08-2015 |
| | | | WO 2015121578 A1 | | 20-08-2015 |
| US 3551034 | A | 29-12-1970 | DE 1301865 B | | 28-08-1969 |
| | | | FR 1407688 A | | 06-08-1965 |
| | | | GB 1113852 A | | 15-05-1968 |
| | | | US 3551034 A | | 29-12-1970 |

EPO FORM P0459

For more details about this annex : see Official Journal of the European Patent Office, No. 12/82

**REFERENCES CITED IN THE DESCRIPTION**

**Patent documents cited in the description**

- FR 2934722